# EUROPEAN PATENT SPECIFICATION

(11) **EP 1 300 073 B1**
(45) Date of publication and mention of the grant of the patent: **05.04.2006**
(21) Application number: 02079015.0
(22) Date of filing: 30.09.2002
(51) Int. Cl.: A01K 5/02

(54) **A device for automatically supplying a predetermined amount of feed to an animal in a period having a predetermined length**
Vorrichtung zur automatischen Zuführung einer bestimmten Futterquantität für ein Tier in einer vorbestimmten Zeitperiode
Dispositif pour distribuer une quantité d'alimentation prédéterminée à un animal dans une période de temps prédéterminée

(30) Priority: 03.10.2001 NL 1019093
(43) Date of publication of application: 09.04.2003
(73) Proprietor: Lely Enterprises AG, 6300 ZUG (CH)
(72) Inventor: Voogd, Lucien Eliza Niels, 4143 HG Leerdam (NL); Van den Berg, Karel, 2971 BR Bleskensgraaf (NL)
(74) Representative: Corten, Maurice Jean F.M.

(56) References cited:
- EP-A- 0 974 264
- WO-A-00/22919
- WO-A-96/05723
- DE-A- 4 137 387
- NL-C- 1 010 898

## Description

The invention relates to a device for automatically supplying a predetermined amount of feed to an animal in a period of time having a predetermined length according to the preamble of claim 1.

Such a device is known from WO-A-9605723.

It is an object of the invention to provide an alternative device for automatically supplying a predetermined amount of feed to an animal.

According to the invention, for that purpose a device of the above-described type comprises the measures of the characterizing part of claim 1. Due to this there is created as it were a time window preceding the momentary visit of an animal and it is determined how much feed in total the animal has actually eaten in that time window, i.e. the period of time having the predetermined length, which period may be for example one day. Consequently when supplying feed, the actually consumed amount and not the amount of feed supplied is taken into account. When the difference between said predetermined amount of feed and the consumed amount is positive, feed is supplied to the animal. The maximum amount of feed to be supplied is smaller than or equal to that difference. The invention is further based on the insight that the predetermined amount of feed to be supplied to an animal has not only to be related to a period of time having the predetermined length, but that the period can also be determined by the number of animals having made use of the feeding parlour, or by another variable comprising a time aspect. In addition, depending on grazing and/or, when the animal is a dairy animal, depending on the last time when the dairy animal has been milked or the time when it is expected to be milked again, the animal is not be fed. Said blocking period may have a fixed value or be dynamic, i.e. variable, for example animal-dependent, season-dependent, lactation period-dependent and the like. It is noticed that the invention is in particular advantageous when no grazing takes place.

It is possible to supply the feed balance to the animal in one time. However, this has the disadvantage that it may happen that an animal cannot eat up the entire feed balance, for example due to the fact that it is jostled from the feeding parlour by another animal. Accordingly, in an embodiment of a device according to the invention, the computer controls the device in such a way that the feed balance is supplied to the animal in feed portions. When a feed portion is not eaten up by the relevant animal, the computer is capable of controlling the relevant components in such a way that no possible further feed portions are supplied.

Depending on the measurement accuracy of the relevant device it is preferred when a feed portion has at least a minimum feed portion size. As a result thereof measurement errors at too small portion sizes, which may result in an inaccurate feeding, are at least avoided to a considerable extent.

Although the feed portion size may have a previously adjusted value, it is preferred when the calculating device of the computer calculates a feed portion size of the feed portions. As a result thereof the feed portion size can be adjusted per animal and possibly depending on the prevailing circumstances. It appears to be extremely suitable when the calculated feed portion size is approximately 5% of the feed balance.

In order not to discourage an animal to come to the feeding parlour, in an embodiment of a device according to the invention, the computer is provided with a comparing device for comparing the calculated feed portion size with the minimum feed portion size, while, when the comparison result indicates that the calculated feed portion size is smaller than the minimum feed portion size, the computer controls the device in such a way that one minimum feed portion size is supplied to the animal. Thus there is always supplied a minimum feed portion to the animal.

In order to be able to check whether the animal actually visits the feeding parlour for eating, when an animal is detected by the animal identification means at the feeding parlour, the computer controls the device in such a way that first one minimum feed portion size is supplied to the animal. When, after the supply of said feed portion the animal leaves the feeding parlour, no further portions are supplied. This has also the advantage that an animal can eat immediately and has not to wait too long until the relevant feed has been composed.

Also when an animal does not consume feed during its visit to the feeding parlour, it is advantageous when the computer stores the points of time when an animal leaves the feeding parlour in the memory. Said points of time may for example be used for behavioural study, but may also be an indication about the state of health of the animal.

In a further embodiment of a device according to the invention, the means for determining an amount of feed consumed by an animal after a supply of feed comprise measuring means for measuring the weight of the feed in the feeding parlour. The measuring means may comprise a weighing device for weighing the amount of feed in the feeding parlour, although other means, such as picture recognition equipment, may also be applied. It is then also possible that the computer stores data in relation to the remaining feed in a feeding parlour in the memory. The calculating device can take this value for the remaining feed into account when determining the feed balance. The feed balance is in particular determined as being the difference between said predetermined amount of feed and said total amount of feed consumed reduced by the amount of remaining feed.

In order to take remaining feed present in a feeding parlour further into account, in an embodiment of a device according to the invention, the computer is provided with a comparing device for comparing the amount of remaining feed with a minimum threshold value, the computer controlling the device for supplying feed to the feeding parlour only when the comparison indicates that the amount of remaining feed is below the minimum threshold value.

The device is preferably suitable for automatically supplying several sorts of feed to an animal in a predetermined period. The device may then be provided with a mixing device for mixing the sorts of feed before the sorts of feed are supplied to the feeding parlour. Alternatively the computer controls the device in such a way that at least one (preferably all) sort(s) of feed is/are supplied at least substantially separately from the other sorts of feed (from each other) to the feeding parlour.

In order immediately to supply feed to an animal reporting for the first time at a feeding parlour of a device provided with several feeding parlours, the computer controls the device in such a way that first feed is supplied to that feeding parlour where an animal has been identified most recently by the animal identification means.

The device according to the invention is preferably provided with at least one milking box with a milking robot for automatically milking a dairy animal, the milking box being provided with a feeding station with a feed trough. Alternatively or additionally the device is provided with at least one feeding column (placed outside the milking box) with a feed trough. When the device comprises both at least one milking box and at least one feeding column, the computer in particular controls the collective supply of feed by the feeding station(s) and the feeding column(s) in such a way that the predetermined amount of feed is supplied to an animal in the predetermined period. This is in particular advantageous when grazing does not take place.

In a further embodiment of a device according to the invention, the feeding station respectively the feeding column is suitable for automatically supplying at least two sorts of feed, the device being provided with parameter-measuring means for measuring a momentary value of a variable parameter (animal-dependently or animal-independently) and for issuing a parameter value signal to the computer, the computer controlling the feeding station respectively the feeding column by means of a control signal in such a way that sorts of feed are supplied in a particular amount and in a particular ratio collectively respectively as a mixture, the computer being provided with a processing device for processing the parameter value signal into the control signal. This embodiment of a device according to the invention is based on the insight that the feed intake of the animals appears to depend on certain varying circumstances. Further, for example the amount and the quality of milk produced by a dairy animal appear to depend on certain varying circumstances. According to the invention this is improved by automatically measuring, with the aid of parameter-measuring means, the momentary value of such a circumstance, called the variable parameter, and by processing the corresponding parameter value signal into the control signal. Thus it is possible to take the change in the parameter automatically into account when supplying feed. Moreover this can make it more attractive for an animal to consume more feed.

The parameter measuring means are in particular selected from the group composed of atmospheric-condition measuring means for measuring the atmospheric conditions, a clock for measuring the point of time of the day, a clock for measuring the period of the year, means for measuring the condition score of an animal, means for determining per animal the eating rate per sort of feed, means for measuring per animal the milk yield, means for measuring the amount of protein and/or fat and/or minerals and/or amino acids and the like in the milk obtained from that animal, and means for measuring the amount of a sort of feed consumed by an animal.

In an advantageous embodiment of a device according to the invention, the feeding station respectively the feeding column is provided with a receptacle, the conveying means comprising a first conveyor for conveying an amount of feed from the hopper to the receptacle and a second conveyor for conveying the amount of feed from the receptacle to a feed trough. The receptacle is preferably provided with a weighing device for measuring feed present in the receptacle. This makes it possible to determine the amount of feed to be supplied to the feed trough.

Although the feed can be taken out of the receptacle by means of a separate taking-out device, for the sake of simplicity of the construction it is advantageous when there is not used a separate device for taking out. There may be used a tiltable receptacle, feed falling from said receptacle after the latter has been tilted. However, for improving the hygienic use of the feeding station respectively the feeding column, it is preferred when the receptacle has a bottom which is designed to be opened. The receptacle is preferably provided with a control device for controlling the opening of the bottom. It has appeared to be particularly suitable when the second conveyor is constituted by a tube-shaped chute respectively a channel-shaped chute.

In order to prevent that an animal keeps waiting at a feeding trough after having been fed, in an embodiment of a device according to the invention, the feed trough is constituted by a feed trough capable of being closed by a closing means, the control device also being suitable for controlling the operation of the closing means.

In a further embodiment of a device according to the invention, the predetermined length of the period is animal-dependent and/or lactation-period-dependent and/or season-dependent and/or weather-dependent. As a result thereof an optimal supply of feed per animal can be obtained.

The invention will now be explained in further detail with reference to an embodiment shown in the drawing, in which:
Figure 1 is a schematic cross-sectional view of a device according to the invention in the form of a feeding column;
Figure 2 is a schematic side view of an embodiment of a device according to the invention in the form of a milking box;
Figure 3 shows a first embodiment of means for measuring the amount of a sort of feed consumed by an animal in a feeding column respectively a feeding station according to the invention;
Figure 4 shows a second embodiment of means for measuring the amount of a sort of feed consumed by an animal in a feeding column respectively a feeding station according to the invention;
Figure 5 shows a third embodiment of means for measuring the amount of a sort of feed consumed by an animal in a feeding column respectively a feeding station according to the invention;
Figure 6 shows a fourth embodiment of means for measuring the amount of a sort of feed consumed by an animal in a feeding column respectively a feeding station according to the invention, and
Figure 7 shows a fifth embodiment of means for measuring the amount of a sort of feed consumed by an animal in a feeding column respectively a feeding station according to the invention.

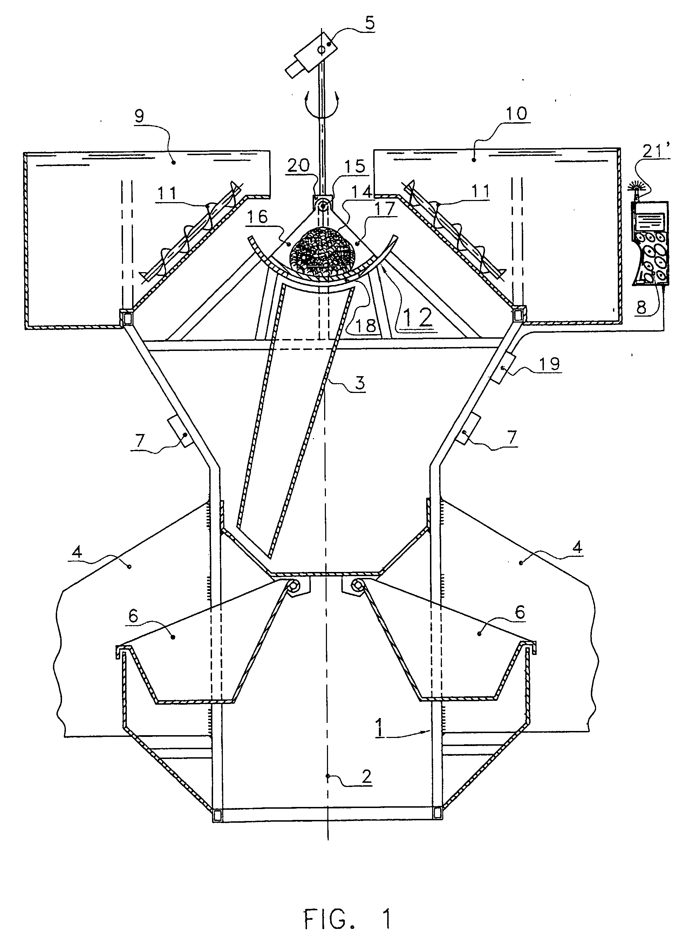

Figure 1 shows an embodiment of a device according to the invention in the form of a feeding column with feed trough. A framework 1, having a substantially circular circumference, is disposed around a central axis 2. A number of hoppers 9, 10 (two of which shown in the drawing) are located at the upper side of the framework 1. For the installation of the hoppers 9, 10 there are made not further shown provisions on the framework 1. Each hopper 9, 10 contains a particular sort of feed.

The framework 1 is provided with partitions 4 which are detachably disposed on the framework 1.

Feed troughs 6 for the animals are disposed in a circular arrangement in the lower part of the feeding column. By means of the geometry of the feeding column it is achieved that the construction occupies little space, while the accessibility of the feeding column to the animals is optimal from all directions.

The feeding column further comprises conveying means comprising a first conveyor 11 and a second conveyor 3 for conveying feed from the hopper 9, respectively 10 to the relevant feed trough 6. The feed can be conveyed directly from the hoppers 9, 10 to the feed troughs 6. In the embodiment shown there is provided a receptacle 12, for example centrally located, receiving an amount of feed conveyed by the first conveyor 11 from the hopper 9, 10 to the receptacle 12. As a first conveyor 11 an auger, gripper, conveyor belt, or any other construction known per se for conveying feed, can be used.

A second conveyor 3, preferably constituted by a tube-shaped chute respectively a channel-shaped chute, is suitable for conveying the amount of feed from the receptacle 12 to the relevant feed trough 6. For conveying the feed to the relevant feed trough 6 it is advantageous when the tube-shaped chute 3 is rotatably mounted in the feeding column. The tube-shaped chute respectively the channel-shaped chute is preferably made of stainless steel.

The feeding column is provided with a second control device 19. The second control device 19 controls under control of a computer 8 (for example interconnected by means of a line) the components of the feeding column in such a way that sorts of feed are supplied in a particular order and/or ratio and in a particular amount to the feed trough 6, while, of course, the time window to be described hereinafter and the feed balance associated therewith are taken into account.

The feeding column may be provided with feed-determining means 5 for determining the sort of feed in a hopper 9, 10. Such feed-determining means may comprise for example an olfactometer, a colour meter or picture recognition equipment (such as described for example in U.S. patent 4,843,561).

For the purpose of conveying an amount of a sort of feed 14 to the tube-shaped chute 3, the receptacle 12 has a bottom which is designed to be opened. In the embodiment shown this is realised in that the bottom of the receptacle 12 has two halves 16 and 17 which are pivotable about an axis 15. When the halves 16, 17 move away from each other, there is thus created a chute aperture 18 through which the amount of sort of feed 14 falls into the tube-shaped chute 3.

The second control device 19, although another (fourth) control device may serve as well for that purpose, controls the opening of the bottom of the receptacle 12. Said second control device 19 preferably also controls the order of functioning of the first and second conveyors 11 respectively 3, so that the supply of the sorts of feed can take place quickly.

There are provided identification means 7 for identifying an individual animal. In the embodiment shown the identification means 7 are disposed on the framework 1, but it will be obvious that the identification means can also be disposed at other places, such as for example the feed troughs 6. With the aid of the identification means 7 the identity of an animal present at a feed trough 6 is automatically detected, and the identity of an animal present at a feed trough 6 is automatically established. With the aid of data stored in the memory of for example the second control device 19, the amounts of sorts of feed intended for that animal can then be supplied in a particular ratio and/or order. With the aid of a weighing device 20 known per se the amount conveyed to the receptacle 12 by the first conveyor 11 can then be checked. The second control device 19 further controls, with the aid of data from the computer 8 and the animal identification means 7, the movement of the tube-shaped chute 3 so that the latter is located just over the correct feed trough 6. The second control device 19, under control of the computer 8, further controls the drive of the conveyors 11.

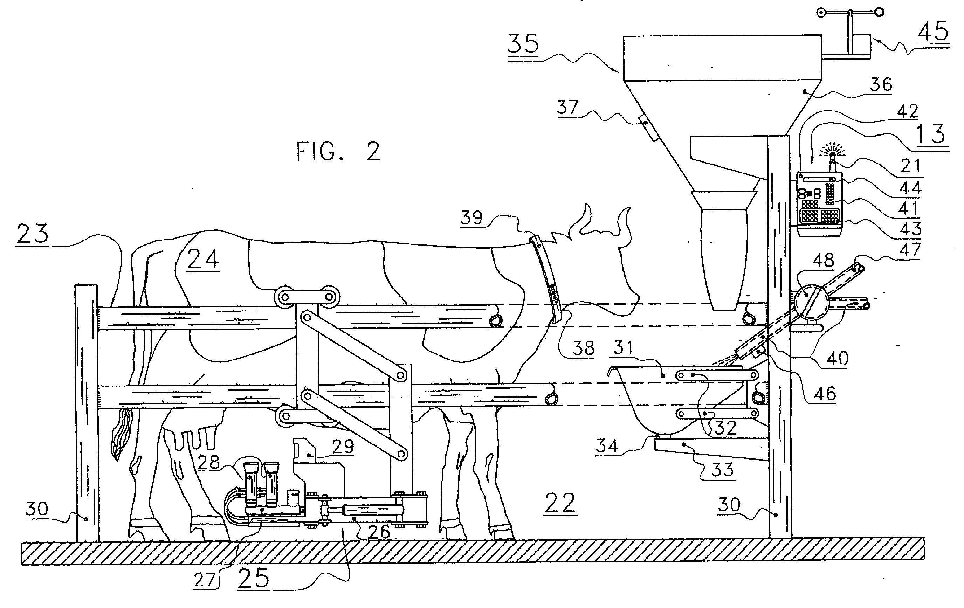

Figure 2 is a side view of an embodiment of a device according to the invention in the form of a milking box 22. The milking box 22 comprises a fencing 23 disposed near the circumference of a cow 24 during her stay in the milking box 22. On one side of the milking box 22 there is disposed a milking robot 25. The milking robot 25 comprises for example a robot arm 26 having at its end teat cups 28 supported by a carrier 27. On the robot arm 26 near the teat cups 28 there is further disposed a sensor 29 with the aid of which the position of the teats of a cow to be milked can be determined.

Near the front side of the milking box 22 a feed trough 31 is fastened to a post 30. In the embodiment shown the feed trough 31 is connected with a post 30 by means of a parallelogram hinge construction 32. The feed trough 31 is supported at its lower side by a supporting beam 33. Between the supporting beam 33 and the lower side of the feed trough 31 there is further disposed a measuring device 34 by means of which the weight of the feed trough 31 with contents can be determined. In the present embodiment the measuring device 34 comprises a piezo-element. It will be obvious that the invention is not limited to this specific manner in which the contents of the feed trough can be measured, and hereinafter some alternative ways of determining the weight of the feed trough with contents will be described.

Over the feed trough 31 there is fitted to the post 30 a feeding station 35 comprising a number of hoppers (not shown in the drawing), each for containing one sort of feed, and a tube-shaped chute (analogously to the feeding column as described above). The feeding station 35 comprises a reservoir 36 surrounding the hoppers for the sorts of feed. Against the outer wall of the reservoir 36 there is disposed a receiver 37 constituting part of (non-shown) identification means. The receiver 37 can receive the signals from a transmitter 38 disposed for example on a collar 39 around the neck of the cow 24. It will be obvious that different sorts of identification means are applicable in the invention and that the invention is not limited to one sort of identification means. The receiver and the transmitter may further be disposed at different places. For example the receiver may be disposed on the feed trough 31 and the transmitter may be implanted in the cow.

Near the upper side of the feed trough 31 there is further fitted to the post 30 a liquid supplying device 40, for example a sprayer, with the aid of which an amount of liquid, for example water, or a viscous liquid, such as syrup or treacle, can be added to the feed present in the feed trough 31.

The device operates as follows:

After the cow 24 has entered the milking box 22 and the transmitter 38 has come into the receiving range of the receiver 37, the cow 24 is automatically identified by the identification means. Per cow data in relation to the sorts of feed and the amount thereof offered to a relevant cow per feeding run are stored in a manner known per se in a memory 41 of a computer 42 belonging to a first control device 13, while, of course, the time window and the feed balance associated therewith are taken into account. The first control device 13 is controlled by the computer 8 which is for example connected in a wireless manner with the first control device 13. For that purpose each control device as well as the computer are provided with a transmitter-receiver 21, 21'.

When a cow 24 has been identified, the identification means send a signal to the computer 42 which, with the aid of the data stored in the memory 41, controls the feeding station 35 in such a way that an amount and ratio of sorts of feed belonging to the cow 24 are supplied possibly in a particular order.

Besides, the amount of feed consumed by a cow can be optimised further by adding an amount of liquid to a sort of feed by means of the liquid supplying device 40. What should be the amount of liquid to be added per cow per sort of feed is determined per cow with the aid of data in the memory 41 of the computer 42. Said data contain per cow a relation between the intake of the sort of feed and the added amount of liquid for obtaining for example a desired milk production. Thus, after a cow 24 has been identified, the computer 42 issues a signal to the liquid supplying device 40 for supplying the relevant amount of liquid. For that purpose the computer 42 uses the relevant data from the memory 41.

For the first use of the device according to the invention these data can be inputted into the memory 41 by making use of inputting means, such as a keyboard 43. This can be done by a farmer who inputs values per cow and per sort of feed according to his experience. For facilitating the input and for checking the functioning of the device during the use thereof, the computer 42 comprises a display screen 44.

The feeding station preferably comprises measuring means 45 for measuring the atmospheric conditions, such as temperature, air humidity, atmospheric pressure, wind speed and the like. The data in the memory 41 can contain per cow a relation between the amount of liquid to be added per sort of feed in dependence on the environmental conditions, which relation leads to a desired feed intake.

Thus in the embodiment described, after a visit of a cow to the milking box the following data are stored in the memory: the amount consumed per sort of feed, the amount of liquid added per sort of feed, the temperature, the air humidity, the atmospheric pressure, the wind speed, and the milk yield, and possibly the order of sorts of feed supplied. When a cow has consumed all the feed supplied, said data are processed by the computer into the memory, so that at a next visit of the cow under the same circumstances the same amounts of liquid can be added to the sorts of feed.

When the cow has not consumed all the feed, at the next visit of the cow to the milking box it is possible to change the amount of liquid which is added to the sorts of feed or the ratio and amount in which the sorts of feed are offered themselves. For changing the amount of liquid to be added different approaches can be made. For example, the amount of liquid to be added can be increased at the next visit by 5% (another increase, or even decrease, is also possible, of course), after which the amount of feed consumed is measured. Accordingly, the amount of liquid is changed automatically per visit of the cow to the milking box until the cow has eaten up the entire amount of the sort of feed supplied. In the latter case the data are recorded by the computer in the memory as standard values. Otherwise, they are stored temporarily, for providing the possibility of determining the standard values. The computer can then be programmed such that certain data are given priority for determining the amount of liquid to be added. An example of a priority order is: amount consumed of the sort of feed, milk yield, air humidity, temperature, atmospheric pressure, wind speed. Of course, another order, in dependence on the wishes of the farmer, is possible as well. Thus there is provided an iterative way of determining the amount of liquid to be added for obtaining the optimal feed intake. This supply of feed by adding liquid can also be used for the feeding column. It will further be obvious that adding or determining the order of supply of sorts of feed takes place analogously to adding liquid.

The liquid supplying device 40 may be provided with a heating device or cooling device 46 for the liquid, bringing the liquid at a temperature suitable for optimal feed intake and possibly making the viscous liquid better processable. The operation of the heating/cooling device 46 can also be controlled by the computer 42 with the aid of data from the identification means and the data from the memory 41.

The device is provided with an additive device 47 for adding additives to the feed. Said additive device can be controlled by the computer 42 which controls for example a valve 48 in dependence on data from the identification means and data from the memory 41. As a result thereof for each cow individually particular additives, such as medicines, vitamins, fish oil, salts, minerals, and the like, can automatically be added to the feed.

By means of the measuring device 34 it is further determined how much feed a relevant cow has consumed during the feeding time. The amount of the sort of feed and the amount of liquid added can also be determined separately. These data can be used for continuously updating the data in the memory and possibly adapting them to a changing eating behaviour of the cow.

As mentioned in the foregoing, some alternatives for determining the weight of a feed trough, in particular of the amount of feed present therein, will now be described.

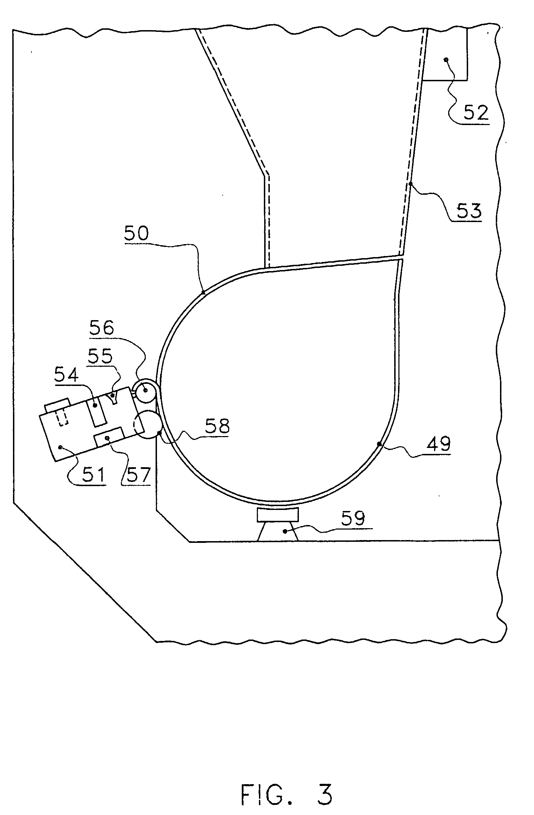

Figure 3 shows schematically a first embodiment of a feed trough 49 for containing feed. An entrance opening 50 gives an animal, for example but not exclusively a cow, access to the feed trough 49. An identification means known per se, i.e. an animal identification device 51, is disposed near the feed trough 49 and recognises a particular animal approaching the feed trough 49 and wishing to make use of it. With the aid of data from the animal identification device 51, a control device 52 supplies an amount of a particular sort of feed to the feed trough 49, the amount of said sort of feed falling into the feed trough 49 via for example a tube-shaped chute 53.

By weighing the amount of the sort of feed present in the feed trough, it can be determined how much of a particular sort of feed is consumed by a particular animal, and also whether remaining feed is present in the feed trough. The means for weighing the feed present in the feed trough are preferably connected with the control device for supplying, with the aid of data both from the animal identification device and the means for weighing, an amount of a sort of feed to the feed trough, while the amount of a sort of feed left by the previous animal can thus be taken into account.

In Figure 3 the means for weighing the feed present in the feed trough 49 comprise a feed trough 49 which is pivotable about a pivot axis 56. The degree of pivoting is determined by the weight of the feed present in the feed trough 49. There is provided a device 57 for determining the degree of pivoting of the feed trough 49, and for deducing therefrom the weight of the feed present in the feed trough 49. The device 57 for determining the degree of pivoting of the feed trough 49 comprises a measuring roll 58 being in contact with the feed trough. From the degree of rotation of the measuring roll 58 the degree of pivoting and thus the amount of feed in the feed trough 49 can be determined.

Because of the fact that the device 57, 58 for determining the degree of pivoting of the feed trough 49 is integrated in the animal identification device 51, there is obtained a compact construction.

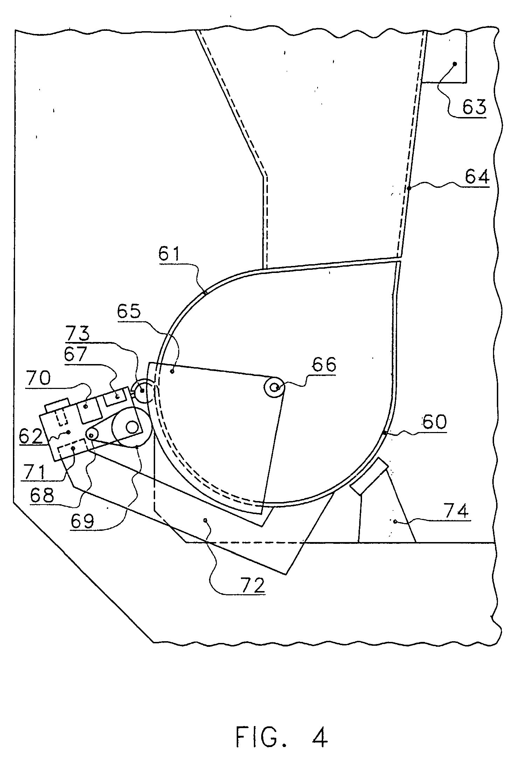

Alternatively or additionally, as shown in Figure 4, the pivoting-determination device 70 for determining the degree of pivoting of the feed trough 60, and for deducing therefrom the weight of the feed present in the feed trough 60, may comprise a dynamometer 71. In the embodiment shown, the feed trough 60 bears on the dynamometer 71 via a supporting arm 72. In this situation the feed trough 60 pivots about a pivot axis 73. The dynamometer 71 is preferably included in the animal identification device 62.

In the embodiments shown in Figures 3 and 4, even small differences in weight can be measured, because the pivot axis 56, 73 and the measuring roll 58 respectively the dynamometer 71 are located at a small distance from each other.

For preventing in undesired cases of malfunction, for example when the animal pushes the feed trough downwards with force, the measuring roll, the dynamometer or the like from being damaged, in both embodiments there may be provided a safety support cam 59 (Figure 3) respectively 74 (Figure 4) for supporting the feed trough 49; 60.

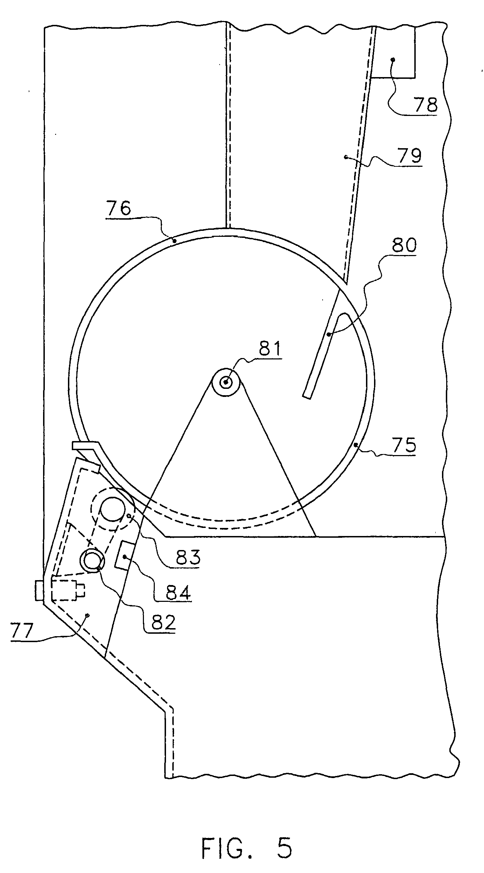

In the third embodiment, as shown schematically in Figure 5, the means for weighing the feed present in the feed unit comprise a movable feed trough 75. The feed trough 75 is moved in a reciprocating manner by the motor 82 by which the roll 83 is driven. As a result of this movement there is created a torque whose magnitude is determined by a device 84 for measuring the magnitude of the torque. From the torque determined the device 84 deduces the weight of the amount of a sort of feed present in the feed trough. The exact correlation between torque and amount of feed can previously be determined by simple calibration tests.

The embodiment according to Figure 5 has a compact construction because of the fact that the motor 82 for moving the feed trough 75, and the device 84 for measuring the magnitude of the torque during moving and for deducing the weight of the amount of the sort of feed present in the feed trough 75 from the measured magnitude of the torque, are integrated in the animal identification device 77.

The feed trough may be provided with means for holding back an animal wishing to make use of the feed trough at an undesired point of time, or preventing that animal from making further use of the feed trough (for example for the remaining sorts of feed) or making further use of the feed trough impossible for that animal, with the aid of data from the animal identification device. As a result thereof it is possible to deter, in a simple, efficient and cheap manner, animals which are not eligible to be fed from putting their heads into the feed trough, and to teach an animal first to eat up the sort of feed present in the feed trough before another sort of feed is offered.

In the first embodiment shown in Figure 3, the means for holding back an animal comprise a loudspeaker 55 for issuing an animal-deterring sound. Alternatively or additionally the means for holding back an animal may comprise a lighting device 54 for producing an animaldeterring light. In particular when several feed troughs are juxtaposed, the use of deterring light is desirable, because this light can be focussed such that it only produces an effect on one particular feed trough.

In the second embodiment according to Figure 4, the means for holding back an animal comprise a closing means 65 which is movable across the entrance opening 61. When the closing means 65 is moved across the entrance opening 61, the contents of the feed trough 60 can be made inaccessible to a particular animal. In the embodiment shown the closing means 65 is constituted by a vessel-shaped element capable of rotating about an axis 66. Said axis 66 may be constituted by a motor-driven axis, said motor being controlled with the aid of data from the animal identification device 62.

Additionally there may be provided a voltage supplying device 67 for supplying an animal-deterring electric tension to the closing means 65. Animals approaching the feed trough 60 undesirably often make contact with the feed trough 60. They will in particular touch the closing means 65 with their noses. By connecting precisely those components of the feed trough that are regularly touched by animals with the voltage supplying device 67, it is possible to deter a particular animal very locally. Accordingly, such a voltage supplying device 67 can also be used per se independently of a closing means.

The second embodiment also comprises a control device 63 and a tube-shaped chute 64 for the feed.

The devices described can be designed extremely compactly when the means for holding back an animal are integrated in the animal identification device. Alternatively the means for holding back an animal may be separate means.

In the third embodiment according to Figure 5, the closing means is constituted by the feed trough 75 itself which is designed movably. In the shown situation the feed trough 75 is rotatably disposed about an axis 81, which axis 81 may be constituted by a motor-driven axis, said motor being controlled by the animal identification device.

In order to prevent that, in the position in which the feed trough 75 closes the entrance opening 76, feed falls from the feed trough 75, the feed trough 75 is provided with a wall portion 80 for catching remaining feed. Said wall portion 80 can also act as a feed guiding means for feed supplied through the tube-shaped chute 79 to the feed trough 75.

As described, in the second and third embodiment there is provided a simple but reliable construction due to the fact that the closing means rotates about an axis, the closing means being driven by a motor controlled by the animal identification device. For the purpose of providing, besides a simple but reliable construction also a compact construction, a roll 69 respectively 83 is preferably driven by a motor 68 respectively 82, said roll 69, 83 being in contact with the closing means 65 respectively 75. In the third embodiment the feed trough 75 thus bears on the animal identification device 77 via the roll 83.

Although for the roll 83 a separate torque roll may be used, it is preferred when the roll 83 performs both the function of driving the closing means, in this case the feed trough 75 itself, and the function of torque roll respectively measuring roll. Of course, in the alternative case in which the feed trough 75 is moved by the axis 81 driven by a motor, the torque can also be measured via that motor.

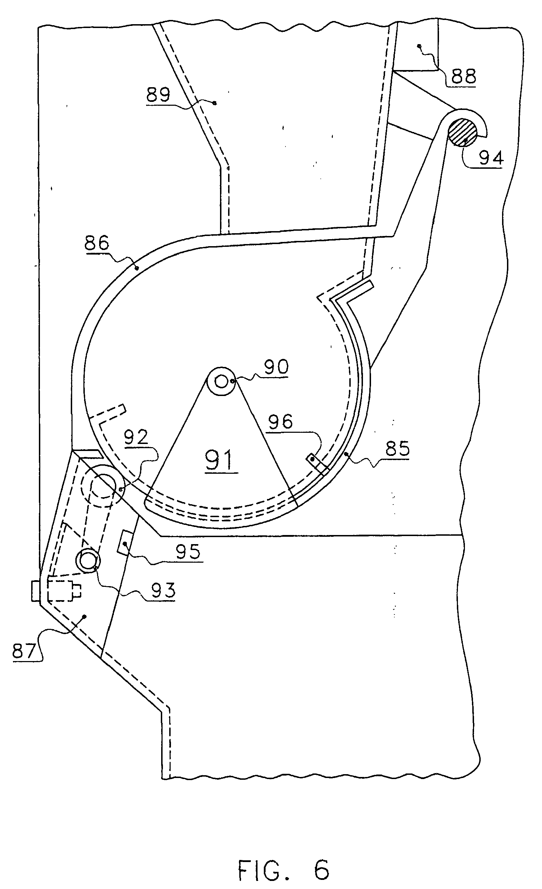

The fourth embodiment, as shown in Figure 6, comprises both means for holding back an animal wishing to make use of the feed trough 85 with the aid of data from the animal identification device 87, and means for weighing the feed present in the feed trough 85.

The means for holding back are constituted by a separate closing means 91 which is rotatable about an axis 90. The closing means 91 is set in rotation by a roll 92, capable of coming into contact with the closing means 91, and is driven by a motor 93 which is controlled by the animal identification device 87.

In this embodiment the weighing means are constituted by a feed trough 85 which is rotatable about an axis 94. The feed unit 85 can be brought into contact with the roll 92, and is subject to a reciprocating movement by correct operation of the motor 93 by which the roll 92 is driven. By the movement of the feed trough 85 there is generated a torque which can be measured by the torque measuring device 95.

In the situation shown in Figure 6 the roll 92 makes contact with the feed trough 85 and the latter can be set in motion for determining the amount of sort of feed present in the feed trough 85. After an animal has consumed the sort of feed, the amount of remaining sort of feed can be determined by torque measurement. Then the roll 92 is controlled by the motor 93 in such a way that it partially covers the entrance opening 86. A catching device 96 on the feed trough 85 takes along the closing means 91 until the latter comes into contact with the roll 92. Then the roll 92 controls the closing means 91 in such a way that it covers the entire entrance opening 86. As a result of the fact that the feed trough 85 is no longer in contact with the roll 92, the feed trough 85 falls back to the starting position in which a next sort of feed can possibly be supplied via the tube-shaped chute or channel-shaped chute 89.

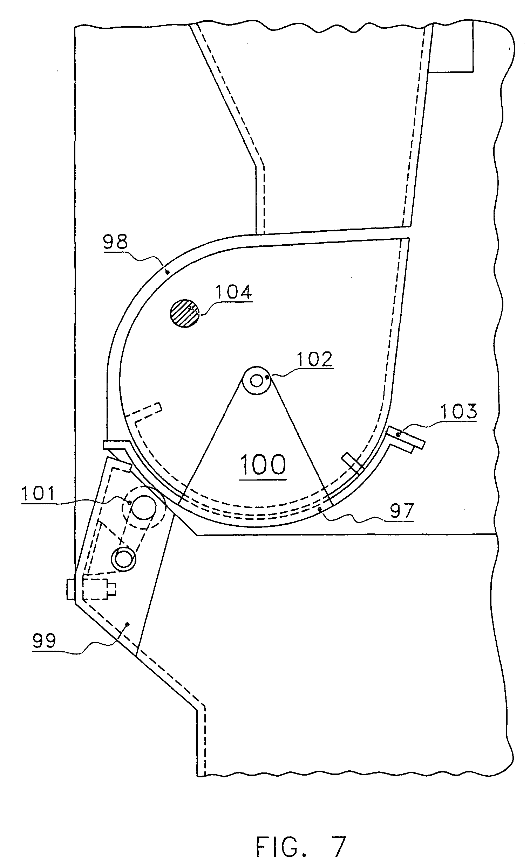

The fifth embodiment according to Figure 7 differs from that of Figure 6 by the location of the pivot axis 104 about which the feed trough 97 rotates. The pivot axis 104 is disposed close to the roll 101 for driving the feed trough 97 and measuring the torque, for measuring very small differences in amount of feed. There is also provided a stop 103 for preventing superfluous movement of the feed trough 97. The closing means 100 for closing the entrance opening 98 pivots about the axis 102.

According to the invention, the supply of sorts of feed to a feed trough in a particular order and/or amount and ratio is performed in dependence on a so-called time window, having a length of a predetermined period, for example one day (although also other periods are possible) or for example a period defined by the visit of , for example 40 cows to the feeding parlour. To that end the calculating device of the computer 8 determines the total amount of a sort of feed (or of all sorts of feed) that has been eaten up by that animal in the time window preceding the momentary visit of the animal. The calculating device further determines the difference between the predetermined amount of a sort of feed (or of all sorts of feed) which is supplied to the animal in said predetermined period (for example the daily ration) and the total amount consumed in the time window. Said difference is the feed balance which can be supplied to the animal. This feed balance is supplied to the animal under control of the computer 8, which can be take place in one time, in feed portions or in other sub-amounts of the feed balance.

As an example is taken a daily feed ration for a particular cow, the sorts of feed being the following four sorts of feed: 12 kg concentrate, 24 kg ensilaged grass, 6 kg maize and 3 kg brewer's grains. However, it will be obvious that other sorts of feed (and amounts) can be added and/or particular sorts of feed can be replaced by other sorts of feed. As portion size 5% of the feed balance is taken, which can be calculated by the calculating device of the computer 8. Depending on the size of the feed trough, there can be determined a maximum, for example 2 kg, of the feed portion. There is further chosen a minimum portion size of 200 grams. It will be obvious that in dependence on the size of the device and the measurement accuracy other values can be taken. At the moment when 5% of the feed balance is less than 200 grams (the minimum portion size), the minimum portion size is supplied to the feed trough.

A cow which has just reported, always gets a first portion which is equal to the minimum portion size; this serves to verify whether the cow actually wishes to eat. When after comparison by a comparing device of the computer the comparison result indicates that the calculated feed portion size for a particular sort of feed is smaller than the minimum feed portion size for this sort of feed, the computer controls the device in such a way that one minimum feed portion size composed of the other sorts of feed is supplied to the animal.

At the point of time when a cow reports the computer calculates how much feed the cow has eaten in the time window immediately preceding that point of time, for example: 3 kg concentrate, 9 kg ensilaged grass, 2 kg maize and 1 kg brewer's grains. In that case the feed balance is 9 kg concentrate, 15 kg ensilaged grass, 4 kg maize and 2 kg brewer's grains. This feed balance is supplied in portions to the cow. There is also determined until when the cow continues to eat up her portions.

At the point of time when a cow leaves the feed trough there may still be present an amount of remaining feed. For the further determination of the supply of feed this remaining feed is taken into account. Possible filling up of a feed trough is taken into account by the computer by making use of a comparison device for comparing the amount of remaining feed with a minimum threshold value, the computer only controlling the device for supplying a sort of feed to the feed trough when the comparison indicates that the amount of remaining feed is below the minimum threshold value.

The blocking time can for example be fixed at 30 minutes, which implies that within the blocking time after a supply of feed at which a cow has eaten, said cow is not admitted to the feed trough. Also when the cow is expected at the milking box within half an hour, the access will be refused. The relevant points of time, such as the point of time of supply of feed or the point of time when the cow leaves the feed trough (after having eaten or not) are stored.

According to the invention there can further be provided,variation in the offered feed in that the computer 8 controls the relevant components in such a way that the amount of a sort of feed to be supplied to the relevant feed trough 6, 31, 49, 60, 75, 85, 97 depends on the measured values of relevant variable parameters. For example, depending on the measured value more concentrate and ensilaged grass, but less maize and brewer's grains can be supplied. On the other hand, under changing circumstances more ensilaged grass, and less maize, concentrate and brewer's grains can be supplied. It will be obvious that the amount per sort of feed is controlled by the computer.

The ratio and amounts are also determined in dependence on the preferences, the environmental conditions respectively in dependence on the desired economic results.

It has been found for example that one cow prefers brewer's grains to other sorts of feed, whereas another cow prefers concentrate and finds brewer's grains not tasty at all. The invention may be advantageous to prevent that the latter cow, just because brewer's grains is present in the offered feed, eats less than desirable. For example, in that situation, when brewer's grains does not contain a nutritive ingredient that the other sorts of feed do contain, brewer's grains is not offered to that cow. When that cow needs an ingredient that is only present in brewer's grains, the control device is capable of controlling the relevant components in such a way that the composition of the mixture is such that the cow still consumes the brewer's grains. Such a control by the computer can take place due to the fact that such data are stored in the memory of the computer.

It has further been found that in humid circumstances cows prefer drier feed mixtures, so that in that case more dry ensilaged grass, and less of the wetter concentrate has to be supplied.

The atmospheric-condition-measuring means described above can then ensure an automatic adaptation of the ratio and/or amount, in dependence on the measured temperature, humidity, atmospheric pressure, wind speed and the like.

Like with human beings, the optimal feed intake of a cow may depend on the point of time of the day, and thus it is possible to distinguish for example breakfast, lunch and dinner. Also these data may be included in the memory. When a clock, which is not explicitly shown in the drawings , but is implicitly present in the computer, indicates the point of time of the day and issues a corresponding time signal to the control device, the point of time of the day can automatically be taken into account. It has further been found that there is per cow a season-dependence in the ratio and amount of sorts of feed offered ensuring an optimal intake, which can automatically be taken into account by means of the clock.

Besides, the eating rate (from which the preference, respectively taste of the animal can be deduced), the milk yield, and the amount of energy and/or protein and/or fat and/or minerals and/or amino acids, and the like present in the milk produced by a cow appear to be suitable for being used as data in the memory for controlling the ratio and amount of the sorts of feed to be supplied.

Such data, analogously to what has been described above in relation to adding liquid, can be inputted into the computer by means of the keyboard or another comparable inputting device for inputting data into the memory. Such data can also automatically be generated by the control device itself, by providing variation in the sorts of feed to be offered and by determining the feed intake resulting therefrom, respectively the economic result resulting therefrom, and by automatically varying the offered feed in dependence on the result. This feed back can also take a developing animal into account.

Because a number of data can be used by the control device for generating the control signal, there can also be provided a priority algorithm, as a result of which, on determining the order of sorts of feed to be offered, one data (for example air humidity) is given priority over another, data (such as eating rate) when generating the control signal. Moreover, weight factors can be allotted to the various data, so that it is possible to take several data into account simultaneously. Such programs and algorithms are known per se to the person skilled in the art.

According to the invention, additionally or alternatively there can be provided variation in the offered feed due to the fact that the computer 8 controls the relevant components in such a way that at least one sort of feed is supplied at least substantially separately from the other sorts of feed to the relevant feed trough 6, 31, 49, 60, 75, 85, 97. Thus the order in which the sorts of feed are offered to the cow can be varied. For example the order may be: concentrate, ensilaged grass, and a mixture of maize and brewer's grains, but may also be: ensilaged grass, a mixture of maize and concentrate, and separately brewer's grains. Besides, all sorts of feed can also be supplied at least substantially separately, of course. It will be obvious that the amount per sort of feed is also controlled by the control device.

The control signal issued by the computer can control the device in such a way that the order in which sorts of feed are supplied to the feed trough separately from each other is completely arbitrary, so that each time when the cow arrives at the feed trough it is a surprise which sort of feed is supplied first.

However, the order can also be determined in dependence on the preference of the relevant cow, respectively in dependence on the environmental conditions, respectively in dependence on the desired economic results.

It has been found for example that one cow prefers brewer's grains to other sorts of feed, whereas another cow prefers concentrate and does not find brewer's grains tasty at all. The invention may be advantageous to prevent that the latter cow, just because brewer's grains is present in the offered feed, eats less than desirable. For example, in that situation, when brewer's grains does not contain a nutritive ingredient that the other sorts of feed do contain, brewer's grains is not offered to that cow. When that cow needs an ingredient that is only present in brewer's grains, the computer is capable of controlling the relevant components in such a way that precisely brewer's grains is offered as the first sort of feed. At this point of time, before the cow begins to eat, she has the most appetite and will earlier be inclined still to consume her portion. This can be stimulated in particular due to the fact that the control device offers, after the brewer's grains, the sort of feed which that cow finds the tastiest one. Such a control by the computer can take place because of the fact that such data are stored in the memory of the computer.

Because the number of possible combinations between data per cow is extremely large, for the sake of simplicity of the description it is impossible to describe the possible combinations. With the aid of the above-mentioned information, it is possible for a person skilled in the art to obtain, depending on his/her wishes, the desired amounts and ratios of sorts of feed to be offered by means of simple trial and error tests. It will further be obvious that the functioning and control of components of the feeding column can also be applied to the feeding station and vice versa. An optimal supply of feed can further be obtained when the sliding window has a length which is animal-dependent and/or lactation period-dependent and/or season-dependent and/or weather-dependent. For example, during the lactation period of an animal the period may be shorter (for example have a length of 23 hours, or the period determined by the visit of 35 cows to the feeding parlour) than outside the lactation period (where the length is for example 24 hours, or 40 cows). Furthermore, in dependence on the moment within the lactation period, the length of the period may be different, for example for obtaining an optimal milk yield.

## Claims

1. A device for automatically supplying a predetermined amount of feed to an animal in a period having a predetermined length, the device being provided with a feeding parlour, with animal identification means (7) for identifying an animal present at the feeding parlour, with a computer (8, 42) for controlling the device for automatically supplying the feed to the feeding parlour, said device being provided with means for determining the amount of feed consumed by an animal after a supply of feed, said amount being stored at least temporarily in a memory of the computer (8, 42), in that the computer (8, 42) is provided with a calculating device for determining the total amount of feed consumed by an animal in the period having the predetermined length immediately preceding the momentary point of time when the animal is identified by the animal identification means (7) at the feeding parlour in that the calculating device determines the difference between said predetermined amount of feed and said total amount of feed consumed by the animal, and in that the computer (8, 42) controls the device in such a way that during the momentary supply of feed an amount of feed smaller than or equal to the difference can be supplied as feed balance to the animal,
**characterized In that** there is included a blocking period in the computer (8, 42), the computer (8, 42) only controlling the device for supplying a sort of feed to the animal after, counted from the last point of time of supply of feed to the animal, the blocking period has elapsed.

2. A device as claimed in claim 1, **characterized in that** said computer (8. 42) being provided with a clock for determining the point of time of supply of feed to the animal.

3. A device as claimed in claim 1 or 2, **characterized in that** the computer (8, 42) controls the device in such a way that the feed balance is supplied to the animal in feed portions.

4. A device as claimed in claim 3, **characterized in that** a feed portion has at least a minimum feed portion size.

5. A device as claimed in claim 3 or 4, **characterized in that** the calculating device of the computer (8, 42) calculates a feed portion size of the feed portions.

6. A device as claimed in claim 5, **characterized in that** the calculated feed portion size is approximately 5% of the feed balance.

7. A device as claimed in claims 4 and 5 or 4 and 6, **characterized in that** the computer (8, 42) is provided with a comparing device for comparing the calculated feed portion size with the minimum feed portion size, while, when the comparison result indicates that the calculated feed portion size is smaller than the minimum feed portion size, the computer (8. 42) controls the device in such a way that one minimum feed portion size is supplied to the animal.

8. A device as claimed in any one of claims 4 through 7, **characterized in that**, when an animal is detected by the animal identification means at the feeding parlour, the computer (8, 42) controls the device in such a way that first one minimum feed portion size is supplied to the animal.

9. A device as claimed in any one of the preceding claims,
**characterized in that** the computer (8, 42) stores the points of time when an animal leaves the feeding parlour in the memory.

10. A device as claimed in any one of the preceding claims,
**characterized in that** the means for determining the amount of feed consumed by an animal after a supply of feed comprise measuring means for measuring the weight of feed in the feeding parlour.

11. A device as claimed in claims 9 and 10, **characterized in that** the computer (8, 42) stores the data in relation to the amount of the remaining feed present in a feeding parlour in the memory.

12. A device as claimed in claim 11, **characterized in that** the calculating device determines the feed balance as being the difference between said predetermined amount of feed and said total amount of feed consumed by the animal reduced by the amount of remaining feed.

13. A device as claimed in claim 10, 11 or 12, **characterized in that** the computer (8, 42) is provided with a comparing device for comparing the amount of remaining feed with a minimum threshold value, the computer (8, 42) only controliing the device for supplying feed when the comparison indicates that the amount of remaining feed is below the minimum threshold value.

14. A device as claimed in any one of the preceding claims,
**characterized in that** the device is suitable for automatically supplying several sorts of feed to an animal in a predetermined period.

15. A device as claimed in claim 14, **characterized in that** the device is provided with a mixing device for mixing the sorts of feed before said sorts of feed are supplied to the feeding parlour.

16. A device as claimed in claim 14, **characterized in that** the computer (8, 42) controls the device in such a way that at least one sort of feed is supplied to the feeding parlour at least substantially separately from the other sorts of feed.

17. A device as claimed in any one of the preceding claims.
**characterized in that** the device is provided with several feeding parlours, and **in that** the computer (8, 42) controls the device in such a way that feed is first supplied to that feeding parlour where an animal has most recently been detected by the animal identification means (7).

18. A device as Gaimed in any one of the preceding claims,
**characterized i**n that the device is provided with at least one milking box (22) with a milking robot for automatically milking a dairy animal, the milking box (22) being provided with a feeding station with a feed trough (6. 31, 49, 60, 75. 85, 97).

19. A device as claimed in any one of the preceding claims,
**characterized in that** the device is provided with at least one feeding column with a feed trough (6, 31, 49, 60, 75, 85, 97).

20. A device as claimed in claim 18 or 19, **characterized in that** the feeding station respectively the feeding column is suitable for automatically supplying at least two sorts of feed, and **in that** the device is provided with parameter measuring means for measuring a momentary value of a variable parameter and for issuing a parameter value signal to the computer (8, 42), the computer (8, 42) controlling the feeding station respectively the feeding column by means of a control signal in such a way that sorts of feed are supplied' in a particular amount and in a particular ratio collectively respectively as a mixture, the computer (8, 42) being provided with a processing device for processing the parameter value signal into the control signal.

21. A device as claimed in claim 20, **characterized in that** the parameter measuring means are selected from the group composed of atmospheric-condition measuring means for measuring the atmospheric conditions, a clock for measuring the point of time of the day, a clock for measuring the period of the year, means for measuring the condition score of an animal, means for determining per animal the eating rate per sort of feed, means for measuring per animal the milk yield, means for measuring the amount of protein and/or fat and/or minerals and/or amino acids and the like in the milk obtained from that animal, and means for measuring the amount of a sort of feed consumed by an animal.

22. A device as claimed in any one of the preceding claims,
**characterized in that** the device respectively the feeding station respectively the feeding column is provided with a receptacle (12) and conveying means comprising a first conveyor (11) for conveying an amount of feed from a hopper (9, 10) to the receptacle (12) and a second conveyor for conveying the amount of feed from the receptacle (12) to a feed trough (6, 31, 49, 60, 75, 85, 97).

23. A device as claimed in claim 22, **characterized in that** the receptacle (12) is provided with a weighing device (20) for measuring feed present in the receptacle (12).

24. A device as claimed in claim 22 or 23, **characterized in that** the receptacle (12) has a bottom which is designed to be opened.

25. A device as claimed in claim 24, **characterized in that** there is provided a control device for controlling the opening of the bottom of the receptacle (12).

26. A device as claimed in any one of claims 22 through 25.
**characterized in that** the second conveyor is a tube-shaped chute (53) respectively a channel-shaped chute (89).

27. A device as claimed in any one of the preceding claims 22 through 26, **characterized in that** the feed trough is a feed trough (6, 31, 49, 60. 75, 85, 97) capable of being closed by a closing means (65, 91, 100), said control device also being suitable for controlling the operation of the closing means (65, 91, 100).

28. A device as claimed in any one of the preceding claims,
**characterized in that** the predetermined length of the period is animal-dependent and/or lactation-period-dependent and/or season-dependent and/or weather-dependent

## Patentansprüche

1. Vorrichtung zum automatischen Zuführen einer vorgegebenen Menge an Futter zu einem Tier in einem Zeitraum von vorgegebener Länge, wobei die Vorrichtung mit einem Fütterungsstand, mit einer Tieridentifikationsvorrichtung (7) zum Identifizieren eines in dem Fütterungsstand befindlichen Tieres und mit einem Computer (8, 42) zum Steuern der Vorrichtung zum automatischen Zuführen des Futters zu dem Fütterungsstand versehen ist, wobei die Vorrichtung mit einer Vorrichtung zum Ermitteln der von einem Tier nach einer Futterzufuhr verzehrten Futtermenge versehen ist, wobei die Menge zumindest vorübergehend in einem Speicher des Computers (8, 42) gespeichert wird, wobei der Computer (8, 42) mit einer Rechenvorrichtung versehen ist, um die gesamte Menge an Futter zu ermitteln, die von einem Tier in dem Zeitraum der vorgegebenen Länge unmittelbar vor dem momentanen Zeitpunkt, zu dem das Tier von der Tieridentifikationsvorrichtung (7) in dem Fütterungsstand identifiziert wird, verzehrt wurde, wobei die Rechenvorrichtung den Unterschied zwischen der vorgegebenen Futtermenge und der von dem Tier verzehrten Gesamtfuttermenge ermittelt, und wobei der Computer (8, 42) die Vorrichtung in der Weise steuert, daß während der momentanen Futterzufuhr eine Futtermenge, die kleiner als oder gleich dem Unterschied ist, dem Tier als Futterguthaben zugeführt werden kann,
**dadurch gekennzeichnet, daß** in dem Computer (8, 42) eine Sperrzeit vorgesehen ist, wobei der Computer (8, 42) die Vorrichtung zum Zuführen einer Futtersorte zu dem Tier nur dann steuert, wenn die Sperrzeit verstrichen ist, gerechnet ab dem letzten Zeitpunkt der Zufuhr von Futter zu dem Tier.

2. Vorrichtung nach Anspruch 1,
**dadurch gekennzeichnet, daß** der Computer (8, 42) mit einer Uhr versehen ist, um den Zeitpunkt der Zufuhr von Futter zu dem Tier zu ermitteln.

3. Vorrichtung nach Anspruch 1 oder 2,
**dadurch gekennzeichnet, daß** der Computer (8, 42) die Vorrichtung in der Weise steuert, daß das Futterguthaben dem Tier in Futterportionen zugeführt wird.

4. Vorrichtung nach Anspruch 3,
**dadurch gekennzeichnet, daß** eine Futterportion zumindest eine minimale Futterportionsgröße aufweist.

5. Vorrichtung nach Anspruch 3 oder 4,
**dadurch gekennzeichnet, daß** die Rechenvorrichtung des Computers (8, 42) eine Futterportionsgröße der Futterportionen errechnet.

6. Vorrichtung nach Anspruch 5,
**dadurch gekennzeichnet, daß** die errechnete Futterportionsgröße etwa 5 % des Futterguthabens beträgt.

7. Vorrichtung nach den Ansprüchen 4 und 5 oder 4 und 6,
**dadurch gekennzeichnet, daß** der Computer (8, 42) mit einer Vergleichsvorrichtung versehen ist, um die errechnete Futterportionsgröße mit der minimalen Futterportionsgröße zu vergleichen, wobei der Computer (8, 42) die Vorrichtung in der Weise steuert, daß dem Tier eine minimale Futterportionsgröße zugeführt wird, wenn das Vergleichsergebnis ergibt, daß die errechnete Futterportionsgröße kleiner ist als die minimale Futterportionsgröße.

8. Vorrichtung nach einem der Ansprüche 4 bis 7,
**dadurch gekennzeichnet, daß** der Computer (8, 42) nach dem Detektieren eines Tieres durch die Tieridentifikationsvorrichtung in dem Fütterungsstand die Vorrichtung in der Weise steuert, daß dem Tier zuerst eine minimale Futterportionsgröße zugeführt wird.

9. Vorrichtung nach einem der vorhergehenden Ansprüche,
**dadurch gekennzeichnet, daß** der Computer (8, 42) in dem Speicher die Zeitpunkte speichert, zu denen ein Tier den Fütterungsstand verläßt.

10. Vorrichtung nach einem der vorhergehenden Ansprüche,
**dadurch gekennzeichnet, daß** die Vorrichtung zur Ermittlung der von einem Tier nach einer Futterzufuhr verzehrten Futtermenge eine Meßvorrichtung zum Messen des Gewichts des Futters in dem Fütterungsstand umfaßt.

11. Vorrichtung nach den Ansprüchen 9 und 10,
**dadurch gekennzeichnet, daß** der Computer (8, 42) in dem Speicher die Daten bezüglich der Menge des restlichen Futters in einem Fütterungsstand speichert.

12. Vorrichtung nach Anspruch 11,
**dadurch gekennzeichnet, daß** die Rechenvorrichtung das Futterguthaben als Unterschied zwischen der vorgegebenen Futtermenge und der von dem Tier verzehrten Gesamtfuttermenge abzüglich der Menge an restlichem Futter ermittelt.

13. Vorrichtung nach Anspruch 10, 11 oder 12,
**dadurch gekennzeichnet, daß** der Computer (8, 42) mit einer Vergleichsvorrichtung versehen ist, um die Menge an restlichem Futter mit einem minimalen Grenzwert zu vergleichen, wobei der Computer (8, 42) die Vorrichtung zum Zuführen von Futter nur dann steuert, wenn der Vergleich ergibt, daß die Menge an restlichem Futter den minimalen Grenzwert unterschreitet.

14. Vorrichtung nach einem der vorhergehenden Ansprüche,
**dadurch gekennzeichnet, daß** die Vorrichtung geeignet ist, einem Tier innerhalb eines vorgegebenen Zeitraumes automatisch mehrere Futtersorten zuzuführen.

15. Vorrichtung nach Anspruch 14,
**dadurch gekennzeichnet, daß** die Vorrichtung mit einer Mischvorrichtung zum Mischen der Futtersorten vor Zuführung dieser Futtersorten zu dem Fütterungsstand versehen ist.

16. Vorrichtung nach Anspruch 14,
**dadurch gekennzeichnet, daß** der Computer (8, 42) die Vorrichtung in der Weise steuert, daß dem Fütterungsstand mindestens eine Futtersorte zumindest im wesentlichen getrennt von den anderen Futtersorten zugeführt wird.

17. Vorrichtung nach einem der vorhergehenden Ansprüche,
**dadurch gekennzeichnet, daß** die Vorrichtung mit mehreren Fütterungsständen versehen ist, und daß der Computer (8, 42) die Vorrichtung in der Weise steuert, daß zuerst demjenigen Fütterungsstand Futter zugeführt wird, in dem ein Tier vor kurzem von der Tieridentifikationsvorrichtung (7) detektiert worden ist.

18. Vorrichtung nach einem der vorhergehenden Ansprüche,
**dadurch gekennzeichnet, daß** die Vorrichtung mindestens eine Melkbox (22) mit einem Melkroboter zum automatischen Melken eines milchgebenden Tieres aufweist, wobei die Melkbox (22) eine Fütterungsstation mit einem Futtertrog (6, 31, 49, 60, 75, 85, 97) aufweist.

19. Vorrichtung nach einem der vorhergehenden Ansprüche,
**dadurch gekennzeichnet, daß** die Vorrichtung mindestens eine Futtersäule mit einem Futtertrog (6, 31, 49, 60, 75, 85, 97) aufweist.

20. Vorrichtung nach Anspruch 18 oder 19,
**dadurch gekennzeichnet, daß** die Fütterungsstation bzw. die Futtersäule geeignet ist, mindestens zwei Futtersorten automatisch zuzuführen, und daß die Vorrichtung mit einer Parametermeßvorrichtung versehen ist, um einen momentanen Wert eines variablen Parameters zu messen und ein Parameterwertsignal an den Computer (8, 42) zu geben, wobei der Computer (8, 42) die Fütterungsstation bzw. die Futtersäule mittels eines Steuersignals in der Weise steuert, daß Futtersorten in einer bestimmten Menge und in einem bestimmten Verhältnis gemeinsam bzw. als Gemisch zugeführt werden, wobei der Computer (8, 42) mit einer Verarbeitungsvorrichtung versehen ist, um das Parameterwertsignal zum Steuersignal zu verarbeiten.

21. Vorrichtung nach Anspruch 20,
**dadurch gekennzeichnet, daß** die Parametermeßvorrichtung aus der Gruppe ausgewählt ist, die zusammengesetzt ist aus einer Atmosphärenbedingungs-Meßvorrichtung zum Messen der atmosphärischen Bedingungen, einer Uhr zum Messen des Tageszeitpunkts, einer Uhr zum Messen der Jahreszeit, einer Vorrichtung zum Messen des Körperkonditionsindexes eines Tieres, einer Vorrichtung zum Ermitteln der Freßgeschwindigkeit pro Futtersorte für jedes Tier, einer Vorrichtung zum Messen der Milchleistung jedes Tieres, einer Vorrichtung zum Messen des Gehalts an Protein und/oder Fett und/oder Mineralien und/oder Aminosäuren und dergleichen in der von diesem Tier gewonnenen Milch und einer Vorrichtung zum Messen der von einem Tier verzehrten Menge einer Futtersorte.

22. Vorrichtung nach einem der vorhergehenden Ansprüche,
**dadurch gekennzeichnet, daß** die Vorrichtung bzw. die Fütterungsstation bzw. die Futtersäule mit einem Behälter (12) sowie mit einer Beförderungsvorrichtung versehen ist, die einen ersten Förderer (11) zum Befördern einer Futtermenge von einem Vorratsbehälter (9, 10) zum Behälter (12) und einen zweiten Förderer zum Befördern der Futtermenge vom Behälter (12) zu einem Futtertrog (6, 31, 49, 60, 75, 85, 97) umfaßt.

23. Vorrichtung nach Anspruch 22,
**dadurch gekennzeichnet, daß** der Behälter (12) mit einer Wiegevorrichtung (20) zum Messen von in dem Behälter (12) befindlichem Futter versehen ist.

24. Vorrichtung nach Anspruch 22 oder 23,
**dadurch gekennzeichnet, daß** der Behälter (12) einen Boden aufweist, der geöffnet werden kann.

25. Vorrichtung nach Anspruch 24,
**dadurch gekennzeichnet, daß** eine Steuervorrichtung zum Steuern der Öffnung des Bodens des Behälters (12) vorhanden ist.

26. Vorrichtung nach einem der Ansprüche 22 bis 25,
**dadurch gekennzeichnet, daß** der zweite Förderer durch einen rohrförmigen Schacht (53) bzw. einen kanalförmigen Schacht (89) gebildet ist.

27. Vorrichtung nach einem der vorhergehenden Ansprüche 22 bis 26,
**dadurch gekennzeichnet, daß** der Futtertrog durch einen Futtertrog (6, 31, 49, 60, 75, 85, 97) gebildet ist, der durch eine Schließvorrichtung (65, 91, 100) verschließbar ist, wobei die Steuervorrichtung auch geeignet ist, den Betrieb der Schließvorrichtung (65, 91, 100) zu steuern.

28. Vorrichtung nach einem der vorhergehenden Ansprüche,
**dadurch gekennzeichnet, daß** die vorgegebene Länge des Zeitraumes von dem Tier und/oder der Laktationsperiode und/oder der Jahreszeit und/oder dem Wetter abhängt.

## Revendications

1. Dispositif pour distribuer automatiquement une quantité d'aliment prédéterminée à un animal dans une période de temps prédéterminée, le dispositif étant pourvu d'une stalle d'affouragement, de moyens d'identification de l'animal (7) pour identifier un animal présent au niveau de la stalle d'affouragement, d'un ordinateur (8, 42) pour commander le dispositif pour distribuer automatiquement l'aliment à la stalle d'affouragement, ledit dispositif étant pourvu de moyens pour déterminer la quantité d'aliment consommé par un animal après une distribution d'aliment, ladite quantité étant stockée au moins provisoirement dans une mémoire de l'ordinateur (8, 42), dans lequel l'ordinateur (8, 42) est pourvu d'un dispositif de calcul pour déterminer la quantité totale d'aliment consommé par un animal dans la période de temps prédéterminée précédant immédiatement le moment où l'animal est identifié grâce aux moyens d'identification de l'animal (7) au niveau de la stalle d'affouragement, dans lequel le dispositif de calcul détermine la différence entre ladite quantité prédéterminée d'aliment et ladite quantité totale d'aliment consommé par l'animal, et dans lequel l'ordinateur (8, 42) commande le dispositif de telle sorte que lors de la distribution momentanée d'aliment, une quantité d'aliment inférieure ou égale à la différence puisse être distribuée comme reste d'aliment à l'animal, **caractérisé en ce qu'**une période de blocage est incluse dans l'ordinateur (8, 42), l'ordinateur (8, 42) ne commandant le dispositif que pour distribuer une sorte d'aliment à l'animal, une fois que la période de blocage s'est écoulée, en comptant à partir du dernier moment de distribution d'aliment à l'animal.

2. Dispositif selon la revendication 1,
**caractérisé en ce que** ledit ordinateur (8, 42) est pourvu d'une horloge pour déterminer le moment précis de distribution d'aliment à l'animal.

3. Dispositif selon la revendication 1 ou 2, **caractérisé en ce que** l'ordinateur (8, 42) commande le dispositif de telle sorte que le reste d'aliment soit distribué à l'animal sous forme de portions d'aliment,

4. Dispositif selon la revendication 3,
**caractérisé en ce qu'**une portion d'aliment a au moins une taille de portion d'aliment minimale.

5. Dispositif selon la revendication 3 ou 4, **caractérisé en ce que** le dispositif de calcul de l'ordinateur (8, 42) calcule une taille de portion d'aliment des portions d'aliment.

6. Dispositif selon la revendication 5,
**caractérisé en ce que** la taille de la portion d'aliment fait environ 5 % du reste d'aliment.

7. Dispositif selon les revendications 4 et 5 ou 4 et 6, **caractérisé en ce que** l'ordinateur (8, 42) est pourvu d'un dispositif de comparaison pour comparer la taille de la portion d'aliment calculée à la taille de la portion d'aliment minimale, alors que, lorsque le résultat de la comparaison indique que la taille de la portion d'aliment calculée est inférieure à la taille de la portion d'aliment minimale, l'ordinateur (8, 42) commande le dispositif de telle manière qu'une taille de portion d'aliment minimale soit distribuée à l'animal.

8. Dispositif selon l'une quelconque des revendications 4 à 7, **caractérisé en ce que**, lorsqu'un animal est détecté par les moyens d'identification de l'animal au niveau de la stalle d'affouragement, l'ordinateur (8, 42) commande le dispositif de telle sorte qu'une taille de portion d'aliment minimale soit tout d'abord fournie à l'animal.

9. Dispositif selon l'une quelconque des revendications précédentes, **caractérisé en ce que** l'ordinateur (8, 42) mémorise les moments donnés où un animal quitte la stalle d'affouragement.

10. Dispositif selon l'une quelconque des revendications précédentes, **caractérisé en ce que** les moyens pour déterminer la quantité d'aliment consommé par un animal après une distribution d'aliment comprennent des moyens de mesure pour mesurer le poids d'aliment dans la stalle d'affouragement.

11. Dispositif selon l'une des revendications 9 et 10, **caractérisé en ce que** l'ordinateur (8, 42) mémorise les données relatives à la quantité d'aliment restant présent dans une stalle d'affouragement.

12. Dispositif selon la revendication 11,
**caractérisé en ce que** le dispositif de calcul détermine le reste d'aliment comme étant la différence entre ladite quantité prédéterminée d'aliment et ladite quantité totale d'aliment consommé par l'animal à laquelle est soustraite la quantité d'aliment restant.

13. Dispositif selon la revendication 10, 11 ou 12, **caractérisé en ce que** l'ordinateur (8, 42) est pourvu d'un dispositif de comparaison pour comparer la quantité d'aliment restant à une valeur de seuil minimale, l'ordinateur (8, 42) commandant uniquement le dispositif pour distribuer l'aliment lorsque la comparaison indique que la quantité d'aliment restant est en deçà de la valeur de seuil minimale.

14. Dispositif selon l'une quelconque des revendications précédentes, **caractérisé en ce que** le dispositif est adapté pour distribuer automatiquement plusieurs sortes d'aliment à un animal dans une période prédéterminée.

15. Dispositif selon la revendication 14,
**caractérisé en ce que** le dispositif est pourvu d'un dispositif de mélange pour mixer les sortes d'aliment avant que lesdites sortes d'aliment ne soient distribuées à la stalle d'affouragement.

16. Dispositif selon la revendication 14,
**caractérisé en ce que** l'ordinateur (8, 42) commande le dispositif de telle façon qu'au moins une sorte d'aliment soit distribuée à la stalle d'affouragement, au moins sensiblement séparément des autres sortes d'aliment.

17. Dispositif selon l'une quelconque des revendications précédentes, **caractérisé en ce que** le dispositif est pourvu de plusieurs stalles d'affouragement et **en ce que** l'ordinateur (8, 42) commande le dispositif de telle sorte que l'aliment soit d'abord distribué à la stalle d'affouragement où un animal a été détecté le plus récemment par les moyens d'identification de l'animal (7).

18. Dispositif selon l'une quelconque des revendications précédentes, **caractérisé en ce que** le dispositif est pourvu d'au moins un box de traite (22) avec un robot de traite pour traire automatiquement un animal laitier, le box de traite (22) étant pourvu d'un poste d'affouragement avec une mangeoire (6, 31, 49, 60, 75, 85, 97).

19. Dispositif selon l'une quelconque des revendications précédentes, **caractérisé en ce que** le dispositif est pourvu d'au moins une colonne d'affouragement avec une mangeoire (6, 31, 49, 60, 75, 85, 97).

20. Dispositif selon la revendication 18 ou 19, **caractérisé en ce que** le poste d'affouragement, respectivement la colonne d'affouragement, est adapté(e) pour distribuer automatiquement deux sortes d'aliment et **en ce que** le dispositif est pourvu de moyens de mesure de paramètres pour mesurer une valeur provisoire d'un paramètre variable et pour émettre un signal de valeur de paramètre à l'ordinateur (8, 42), l'ordinateur (8, 42) commandant le poste d'affouragement, respectivement la colonne d'affouragement, au moyen d'un signal de commande de telle sorte que les sortes d'aliment soient distribuées selon une quantité particulière et selon une proportion particulière collectivement respectivement sous forme d'un mélange, l'ordinateur (8, 42) étant pourvu d'un dispositif de traitement pour traiter le signal de la valeur de paramètre en signal de commande.

21. Dispositif selon la revendication 20,
**caractérisé en ce que** les moyens de mesure de paramètres sont choisis dans le groupe constitué des moyens de mesure de conditions atmosphériques pour mesurer les conditions atmosphériques, d'une horloge pour mesurer le moment de la journée, d'une horloge pour mesurer la période de l'année, de moyens pour mesurer le score de condition d'un animal, de moyens pour déterminer par animal le rythme alimentaire par sorte d'aliment, de moyens pour mesurer par animal la production de lait, de moyens pour mesurer la quantité de protéine et/ou de matière grasse et/ou de minéraux et/ou d'acides aminés et similaire dans le lait obtenu à partir de cet animal, et de moyens pour mesurer la quantité d'une sorte d'aliment consommé par un animal.

22. Dispositif selon l'une quelconque des revendications précédentes, **caractérisé en ce que** le dispositif, respectivement le poste d'affouragement, respectivement la colonne d'affouragement, est pourvu(e) d'un conteneur (12) et de moyens d'acheminement comprenant un premier convoyeur (11) pour acheminer une quantité d'aliment depuis une trémie (9, 10) jusqu'au conteneur (12) et un second convoyeur pour acheminer la quantité d'aliment depuis le conteneur (12) jusqu'à une mangeoire (6, 31, 49, 60, 75, 85, 97).

23. Dispositif selon la revendication 22,
**caractérisé en ce que** le conteneur (12) est pourvu d'un dispositif de pesage (20) pour mesurer l'aliment présent dans le conteneur (12).

24. Dispositif selon la revendication 22 ou 23, **caractérisé en ce que** le conteneur (12) a un fond qui est conçu pour être ouvert.

25. Dispositif selon la revendication 24,
**caractérisé en ce qu'**il prévoit un dispositif de commande pour commander l'ouverture du fond du conteneur (12).

26. Dispositif selon l'une quelconque des revendications 22 à 25, **caractérisé en ce que** le second convoyeur est une trémie tubulaire (53) respectivement une trémie en forme de canal (89).

27. Dispositif selon l'une quelconque des revendications précédentes 22 à 26, **caractérisé en ce que** la mangeoire est une mangeoire (6, 31, 49, 60, 75, 85, 97) apte à être fermée par des moyens de fermeture (65, 91, 100), ledit dispositif de commande étant également adapté pour commander le fonctionnement des moyens de fermeture (65, 91, 100).

28. Dispositif selon l'une quelconque des revendications précédentes, **caractérisé en ce que** la période de temps prédéterminée dépend de l'animal et/ou dépend de la période de lactation et/ou dépend des saisons et/ou dépend du temps.
